# FASCICULE DE BREVET EUROPEEN

(11) **EP 0 484 193 B1**
(45) Date de publication et mention de la délivrance du brevet: **22.02.1995**
(21) Numéro de dépôt: 91402720.6
(22) Date de dépôt: 11.10.1991
(51) Int. Cl.: G01F 15/10

(54) **Installation de comptage d'eau protégée contre le gel**
Reifgeschützte Wasserzähleranlage
Water meter installation protected against frost

(30) Priorité: 31.10.1990 FR 9013542
(43) Date de publication de la demande: 06.05.1992
(73) Titulaire: MANUFACTURE D'APPAREILLAGE ELECTRIQUE DE CAHORS, F-46003 Cahors Cédex (FR)
(72) Inventeur: Janicot, Marc, F-46000 Cahors (FR)
(74) Mandataire: Keib, Gérard

(56) Documents cités:
- FR-A- 2 499 293
- FR-A- 2 606 052

## Description

La présente invention concerne une installation de comptage d'eau protégée contre les risques de gel.

Dans les installations de comptage d'eau, le compteur d'eau est relié à une conduite d'arrivée d'eau et à une conduite de départ d'eau enterrées dans le sol.

Le compteur d'eau est situé soit au-dessus du niveau du sol soit dans un puits, de préférence fermé à sa partie supérieure par un tampon amovible permettant d'accéder au compteur.

Dans le premier cas, c'est-à-dire lorsque le compteur est au-dessus du niveau du sol, il peut être protégé extérieurement par un boîtier, cuve, ou analogue qui permet également d'accéder au compteur.

Dans tous les cas, il convient de protéger le compteur et les conduites d'arrivée et de départ d'eau contre les risques de gel.

A cet effet, diverses techniques ont été proposées.

Selon l'une de ces techniques décrite dans EP-A-0 116 005, il a été proposé de protéger les conduites d'eau reliées au compteur par des caloducs enterrés dans le sol et placés en condition d'échange thermique avec les conduites.

Selon une autre technique connue, il a été proposé de tapisser l'intérieur du puits dans lequel s'étendent les conduites d'eau, ainsi que l'intérieur de l'enceinte dans laquelle se situe le compteur par des éléments en matière isolante telle que du polystyrène expansé ou de la mousse de polyuréthane.

Toutefois, la mise en oeuvre de ces moyens de protection contre le gel est compliquée et par conséquent coûteuse.

De plus, dans ces réalisations connues, des ponts thermiques subsistent entre le compteur et l'extérieur, de sorte que la protection à l'égard du gel n'est pas totale.

Le document FR-A-2 612 278 décrit un compteur d'eau monté pivotant sur une embase comportant deux passages d'eau reliés respectivement aux conduites d'arrivée et de départ d'eau.

Grâce à cette disposition, l'ouverture et la fermeture de l'arrivée d'eau sont commandées en faisant tourner le compteur par rapport à l'embase pour amener les passages d'eau de l'embase en coïncidence avec ceux du compteur ou pour les en écarter.

Une telle installation est d'utilisation particulièrement commode, mais elle pose cependant les problèmes de protection à l'égard du gel évoqués plus haut.

Le but de la présente invention est de remédier aux inconvénients des réalisations connues, en proposant une installation de comptage d'eau qui soit à la fois commode à utiliser, facile à installer dans le sol et efficacement protégée à l'égard des risques de gel.

L'invention vise ainsi une installation de comptage d'eau protégée contre les risques de gel, comprenant un compteur d'eau relié à une conduite d'arrivée d'eau et à une conduite de départ d'eau, ce compteur d'eau étant monté sur une embase dans laquelle débouchent lesdites conduites d'arrivée et de départ d'eau, ces conduites s'étendant dans une tranchée réalisée dans le sol, cette installation comprenant une enveloppe , essentiellement en matière thermiquement isolante qui entoure les conduites et est ouverte vers le bas. Une telle installation est connue du document FR-A-2 606 052.

Suivant l'invention, cette installation est caractérisée en ce que la partie supérieure de cette enveloppe comporte un passage vertical dans lequel est engagée l'embase du compteur, le compteur d'eau étant situé au-dessus de l'enveloppe, en ce que le compteur est coiffé par un chapeau en matière isolante dont le bord inférieur est en contact avec la partie supérieure de la matière isolante de ladite enveloppe, en ce que l'enveloppe en matière thermiquement isolante, comprend une coque extérieure moulée en matière plastique rigide recouverte sur la quasi-totalité de sa face intérieure d'une matière thermiquement isolante, et en ce que la partie inférieure de la coque extérieure rigide est évasée vers le bas.

L'enveloppe est réalisée essentiellement en matière thermiquement isolante qui entoure de façon continue les conduites et l'embase et les protège ainsi du gel.

L'ouverture vers le bas est réalisée dans une zone non exposée au gel et à température sensiblement constante, de sorte que l'enveloppe est maintenue par échange thermique à travers ladite ouverture à une température intérieure sensiblement constante, température à laquelle se trouvent également maintenues les conduites et l'embase.

De plus, la fixation de l'embase directement dans la matière thermiquement isolante supprime les ponts thermiques rencontrés dans les installations conventionnelles. Ceci permet, pour la même efficacité, de réduire les épaisseurs de matière thermiquement isolante et de diminuer ainsi le volume extérieur de l'installation.

La faible taille de l'installation permet alors sa mise en place sans effectuer de fouille spéciale et de creuser une simple tranchée de largeur comparable à celle exigée pour la mise en place de canalisations : ceci conduit donc à des économies pour la réalisation du chantier, relativement au cubage de terre déplacée et aux temps opératoires.

D'autres particularités de l'invention résulteront encore de la description qui va suivre.

Aux dessins annexés:
- la figure 1 est une vue en coupe longitudinale d'une installation suivant l'invention ;
- la figure 2 est une vue en coupe suivant le plan II-II de la figure 1 ;
- la figure 3 est une vue en coupe longitudinale partielle à échelle agrandie montrant la fixation de l'embase du compteur à la matière thermiquement isolante suivant le plan III-III de la figure 4 ;
- la figure 4 est une vue en coupe suivant le plan IV-IV de la figure 3 ;
- la figure 5 est une vue en coupe longitudinale partielle à échelle agrandie de la cuve contenant le chapeau, suivant le plan V-V de la figure 6 ;
- la figure 6 est une vue en coupe suivant le plan VI-VI de la figure 5 ;
- la figure 7 est une vue schématique en coupe longitudinale d'une installation enterrée suivant l'invention ;
- les figures 8 et 9 sont des vues schématiques similaires à la figure 7.

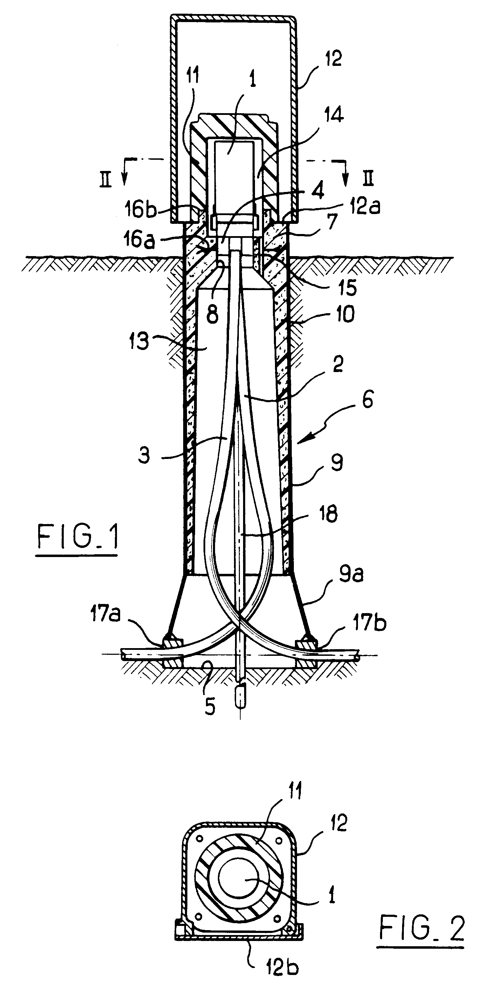

Dans la réalisation des figures 1 à 4, l'installation de comptage d'eau comprend un compteur d'eau 1 relié à une conduite 2 d'arrivée d'eau et à une conduite 3 de départ d'eau, par exemple en polyéthylène. Le compteur d'eau 1 est monté sur une embase 4 dans laquelle débouchent lesdites conduites 2, 3 d'arrivée et de départ d'eau.

Ces conduites 2, 3 s'étendent dans une tranchée réalisée dans le sol et pénètrent dans le sol au fond 5 de cette tranchée.

Suivant l'invention, l'installation comprend une enveloppe 6 en matière thermiquement isolante formant le pied de l'installation qui entoure les conduites 2, 3 et est ouverte vers le bas. La partie supérieure 7 de cette enveloppe 6 comporte un passage vertical 8 dans lequel est engagée l'embase 4 du compteur. Cette embase 4 est fixée directement à la matière isolante de l'enveloppe 6 par des moyens qui seront détaillés plus loin évitant la création d'un pont thermique entre l'embase 4 et l'extérieur. L'épaisseur de matière isolante qui entoure l'embase 4 est supérieure à l'épaisseur de matière isolante gui entoure les conduites 2 et 3.

De plus, l'épaisseur de matière isolante qui entoure les moyens de fixation de l'embase 4 dans la matière isolante est au moins égale à l'épaisseur de matière isolante qui entoure les conduites 2 et 3.

L'enveloppe 6 en matière thermiquement isolante comprend une coque extérieure 9 moulée en matière plastique rigide recouverte sur sa face intérieure d'une matière thermiquement isolante 10.

Cette matière thermiquement isolante 10 est de préférence une matière plastique expansée, telle qu'une mousse de polyuréthane.

Par ailleurs, le compteur 1 est coiffé par un chapeau 11 en matière thermiquement isolante de même nature que celle de l'enveloppe 6. Le bord inférieur de ce chapeau 11 est en contact avec la partie supérieure de la matière thermiquement isolante de l'enveloppe 6.

Le chapeau isolant 11 est lui-même contenu à l'intérieur d'une cuve 12 en matière plastique dont le bord inférieur 12a est solidaire du bord supérieur de l'enveloppe isolante 6. Cette cuve 12 comporte une porte latérale 12b.

Par ailleurs, l'espace d'air 13 entourant les conduites 2, 3 communique avec l'espace d'air 14 compris entre le chapeau isolant 11 et le compteur 1 par des passages d'air 15 ménagés dans la paroi supérieure 7 de l'enveloppe isolante 6.

On voit également sur la figure 1 que les bords en contact du chapeau isolant 11 et de l'enveloppe isolante 6 présentent des épaulements complémentaires 16b emboîtés l'un dans l'autre.

Dans l'exemple représenté, le compteur 1 est monté de façon rotative sur l'embase 4 entre une position d'ouverture et de fermeture de l'arrivée d'eau. Cette disposition est connue selon le document FR-A-2 612 278. Par conséquent, la liaison entre le chapeau isolant 11 et la partie supérieure de l'enveloppe isolante 6 est adaptée pour permettre une rotation du compteur 1 entre les deux positions précitées ainsi que pour permettre un démontage et un échange dudit compteur 1.

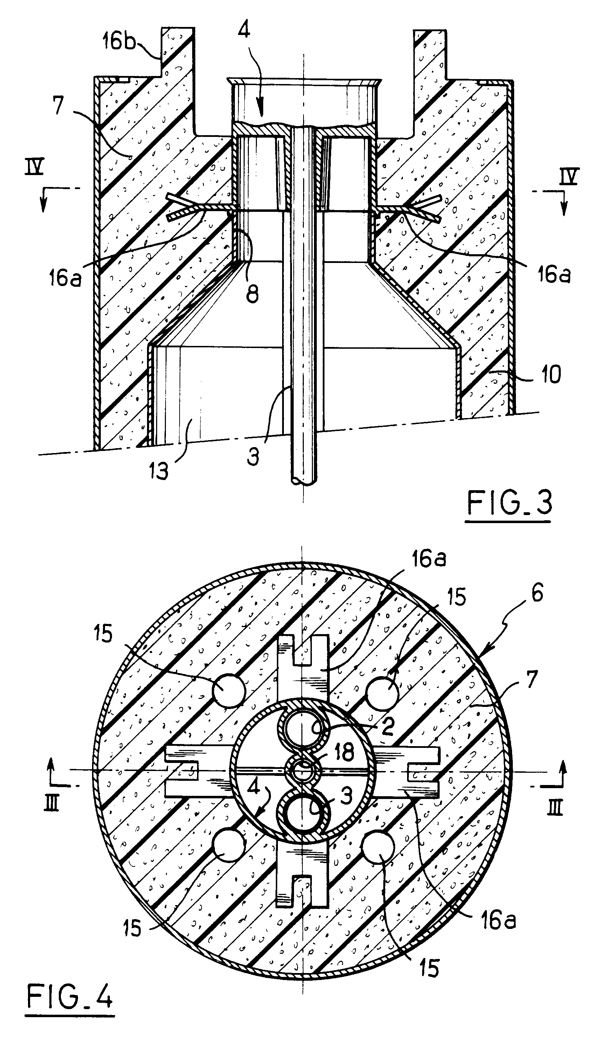

Comme on le voit sur la figure 3, la fixation entre l'embase 4 et l'ouverture 8 ménagée à la partie supérieure 7 de l'enveloppe isolante 6 est assurée par des pattes métalliques 16a scellées dans la matière isolante 10 de cette enveloppe. Les extrémités de ces pattes 16a sont situées à une distance suffisante de la face extérieure de l'enveloppe 6 pour éviter la création de ponts thermiques entre l'embase 4 et l'extérieur.

L'embase 4 est réalisée en matériau métallique moulé, par exemple du laiton. L'embase comprend un tube annulaire central coopérant avec un caloduc 18 pour assurer un transfert thermique. Ledit tube est solidaire de deux cloisons verticales orientées suivant un diamètre et assurant la rigidité mécanique de l'embase.

Perpendiculairement audit diamètre, sont prévus deux manchons cylindriques diamétralement opposés et permettant l'emmanchement des conduites 2 et 3.

On voit également sur la figure 1 que la partie inférieure 9a de la coque extérieure rigide 9 est évasée vers le bas, pour améliorer l'ancrage de l'enveloppe 6 dans le sol.

Par ailleurs, le bord inférieur de ladite partie évasée 9a comporte deux ouvertures 17a, 17b diamétralement opposées pour le passage des conduites 2, 3 d'arrivée et de départ d'eau.

Dans la réalisation représentée, l'enveloppe isolante 6 entoure également un caloduc 18 s'étendant verticalement entre l'embase 4 et le fond 5 de la tranchée creusée dans le sol. Ce caloduc 18 pénètre suivant une certaine profondeur dans le sol pour y prélever des calories et maintenir ainsi l'embase 4 et le compteur à une température qui minimise les risques de gel.

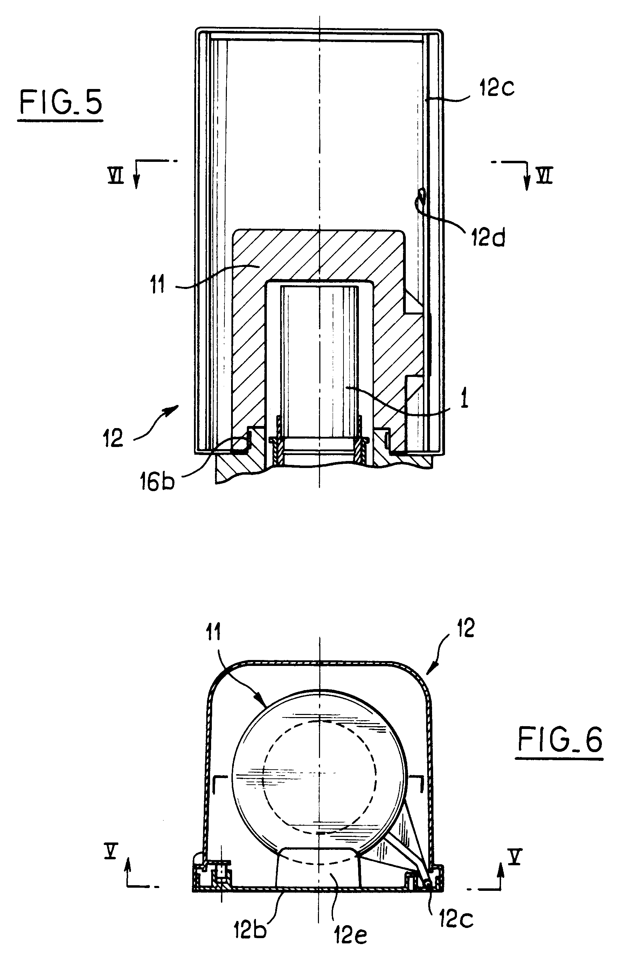

Sur les figures 5 et 6, on voit que le chapeau 11 est conformé de façon à pouvoir pivoter autour d'un axe 12c, qui permet également l'ouverture et le pivotement de la porte 12b.

La porte 12b s'ouvre et pivote à 180° autour de l'axe 12c.

Des moyens pour retenir le chapeau 11 en position haute comprennent une lame métallique élastique 12d.

Lorsqu'on déboîte le chapeau 11 en le soulevant au-dessus des conformations 16b, on peut le lever jusqu'à une position supérieure où il sera retenu par la lame flexible 12d.

Lorsqu'on veut abaisser le chapeau 11, on appuie sur la lame 12d de façon à permettre le coulissement et la descente du chapeau 11 le long de l'axe 12c.

Le mode opératoire est le suivant :
- l'opérateur ouvre la porte 12b, après l'avoir déverrouillée, et la fait pivoter de 180° autour de l'axe 12c ;
- l'opérateur soulève le chapeau 11 jusqu'à le maintenir en position haute par la lame 12d ;
- l'opérateur fait pivoter le chapeau de 180° autour de l'axe 12c et intervient sur le compteur ;
- l'opérateur effectue les opérations inverses dans l'ordre inverse pour refermer et verrouiller la porte.

La porte 12b comprend un moyen 12e coopérant avec le chapeau 11 pour assurer la bonne mise en place et l'emboîtement du chapeau 11 sur les conformations 16b lorsque la porte est refermée.

Le moyen 12e comprend une nervure horizontale située juste au-dessus de la face supérieure du chapeau isolant 11 lorsque le chapeau est emboîté et la porte refermée.

Si le chapeau 11 n'est pas correctement emboîté, la nervure 12e vient en appui sur le haut du chapeau 11 et empêche la fermeture de la porte 12b.

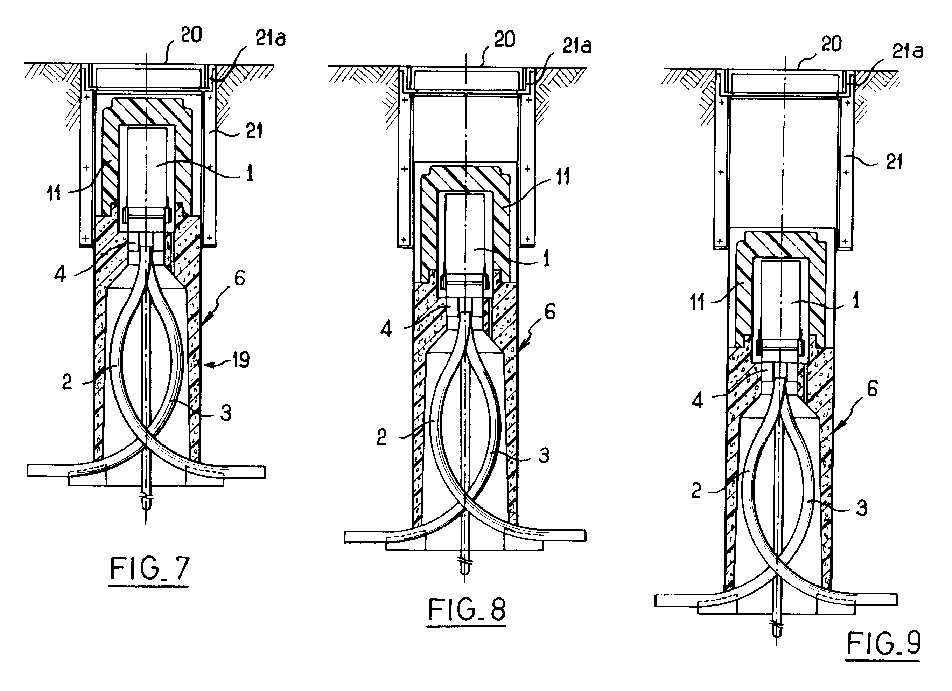

Dans la réalisation des figures 7 à 9, l'installation est complètement contenue dans un puits 19 ménagé dans le sol, dont la profondeur est variable.

Le puits 19 est fermé à sa partie supérieure par un tampon 20 permettant d'accéder au compteur 1. La partie supérieure du puits comprend une rehausse 21 en forme de manchon dont le bord supérieur 21a reçoit le tampon 20.

La surface intérieure de la rehausse 21 est adaptée à la surface extérieure de l'enveloppe 6 formant pied pour permettre un coulissement relatif entre cette rehausse 21 et l'enveloppe 6. Il est ainsi possible, comme le montrent les figures 7, 8 et 9, d'implanter l'installation à des profondeurs variables sans avoir à modifier la longueur de l'enveloppe 6. Il suffit à cet effet que la longueur axiale de la rehausse corresponde au moins à la différence entre les profondeurs maximale et minimale du puits 19.

Les effets techniques et les avantages de l'installation selon l'invention sont les suivants :
La matière isolante continue de l'enveloppe 6 délimite avec le chapeau isolant emboîté 11 un volume d'air sensiblement isotherme sans pont thermique qui protège du gel tout le circuit intérieur hydraulique de l'installation.

L'ouverture en partie basse de l'enveloppe 6 formant pied permet en effet l'échange avec le sol par convection d'air dans le volume intérieur au pied et avec le volume intérieur au chapeau par le passage 15 prévu à cet effet. La température dudit volume intérieur devient donc sensiblement égale à celle régnant à la profondeur d'enfouissement dans le sol, qui est constante et comprise en général entre 4°C et 12°C. Le caloduc 18 relié à l'embase 4 renforce cet effet de protection contre le gel, en effectuant un transfert thermique depuis une profondeur plus importante, donc à une température plus élevée.

On a ainsi protégé du gel tout le circuit hydraulique et on diminue de plus l'usure du compteur d'eau qui se trouve dans la réalisation selon l'invention à l'abri des chocs thermiques. La fiabilité de l'installation s'en trouve donc accrue.

L'évasement vers le bas de l'enveloppe 6 assure la stabilité de l'installation dans le sol en procurant un bon appui au pied et en outre une meilleure résistance à l'arrachement.

Du fait de son volume extérieur réduit, l'installation est très facile à mettre en place et l'importance du chantier est comparable à la mise en place de simples canalisations. Par ailleurs, la moindre quantité de matières mises en oeuvre dans ce volume réduit entraîne une économie sur les coûts de fabrication.

Ainsi, la mise en place de l'installation dans le sol comprend les étapes suivantes :
- on réalise une tranchée depuis la conduite principale jusqu'à l'abonné, de largeur nécessaire à l'implantation d'une canalisation,
- on fore un trou adéquat pour le logement du caloduc 18 à l'emplacement choisi pour l'installation,
- on dépose un lit de sable au fond de la tranchée,
- on place l'installation verticalement dans la tranchée en mettant le caloduc 18 en place dans son trou de logement,
- on raccorde la conduite de départ à la canalisation du réseau de distribution et la conduite d'arrivée à la canalisation du réseau abonné,
- on établit la circulation d'eau et on teste le fonctionnement du dispositif et l'étanchéité après raccordement,
- on referme la tranchée par remblayage au niveau désiré en maintenant l'installation dans la position désirée.

Les effets techniques précités révèlent les avantages de l'invention par rapport aux dispositifs existants : l'installation assure une meilleure protection contre le gel, est plus économique à fabriquer, plus facile à installer, d'un volume plus réduit et donc plus légère à transporter.

Bien entendu, l'invention n'est pas limitée aux modes de réalisation décrits ci-dessus et on peut y apporter des variantes d'exécution.

On peut notamment disposer en fond de tranchée une grille à mailles fines pour assurer la propreté de l'espace 13 intérieur à l'enveloppe et empêcher la pénétration des insectes ou petits animaux. Cette grille est de préférence solidaire de l'installation et montée en usine.

## Revendications

1. Installation de comptage d'eau protégée contre les risques de gel, comprenant un compteur d'eau (1) relié à une conduite d'arrivée d'eau (2) et à une conduite de départ d'eau (3), ce compteur d'eau (1) étant monté sur une embase (4) dans laquelle débouchent lesdites conduites (2, 3) d'arrivée et de départ d'eau, ces conduites (2, 3) s'étendant dans une tranchée réalisée dans le sol, cette installation comprenant une enveloppe (6) essentiellement en matière thermiquement isolante qui entoure les conduites (2, 3) et est ouverte vers le bas, caractérisée en ce que la partie supérieure (7) de cette enveloppe (6) comporte un passage vertical (8) dans lequel est engagée l'embase (4) du compteur, le compteur d'eau étant situé au-dessus de l'enveloppe (6), en ce que le compteur (1) est coiffé par un chapeau (11) en matière isolante dont le bord inférieur est en contact avec la partie supérieure de la matière isolante de ladite enveloppe (6), en ce que l'enveloppe (6) en matière thermiquement isolante comprend une coque extérieure (9) moulée en matière plastique rigide recouverte sur la quasi-totalité de sa face intérieure d'une matière thermiquement isolante (10), et en ce que la partie inférieure (9a) de la coque extérieure rigide (9) est évasée vers le bas.

2. Installation conforme à la revendication 1, caractérisée en ce que la matière thermiquement isolante est une matière plastique expansée.

3. Installation conforme a l'une des revendications 1 ou 2, caractérisée en ce que le chapeau isolant (11) est lui-même intérieur à une cuve (12) en matière plastique qui surmonte l'enveloppe (6).

4. Installation conforme à l'une des revendications 1 à 3, caractérisée en ce que l'épaisseur de matière isolante qui entoure l'embase (4) est supérieure à l'épaisseur de matière isolante qui entoure les conduites (2) et (3).

5. Installation conforme à l'une des revendications 1 à 4, caractérisée en ce que l'espace d'air (13) entourant les conduites (2, 3) communique avec l'espace d'air (14) compris entre le chapeau isolant (11) et le compteur (1) par un passage d'air (15) ménagé dans la matière isolante de l'enveloppe (6).

6. Installation conforme à l'une des revendications 1 à 5, caractérisée en ce que les bords en contact du chapeau isolant (11) et de la matière isolante de l'enveloppe (6) présentent des épaulements complémentaires (16b) emboîtés l'un dans l'autre évitant la création d'un pont thermique.

7. Installation conforme à l'une des revendications 1 à 6, caractérisée en ce que le compteur (1) est monté de façon rotative sur l'embase (4) entre une position d'ouverture et une position de fermeture de l'arrivée d'eau, et en ce que les épaulements complémentaires (16b) dans la matière isolante, les parties de la cuve (12) et de l'enveloppe (6) adjacentes au compteur (1) sont adaptées pour permettre une rotation du compteur (1) entre les deux positions précitées.

8. Installation conforme à l'une des revendications 1 à 7, caractérisée en ce que l'embase (4) est fixée à l'enveloppe (6) par des moyens (16a) évitant la création de ponts thermiques entre l'embase (4) et l'extérieur.

9. Installation conforme à l'une des revendications 1 à 8, caractérisée en ce que la fixation entre l'embase (4) et le passage (8) à la partie supérieure de l'enveloppe (6) isolante est assurée par des pattes (16a) scellées dans la matière isolante de cette enveloppe.

10. Installation conforme à l'une des revendications 1 à 9, caractérisée en ce que le bord inférieur de ladite partie évasée (9a) comporte deux ouvertures (17a, 17b) transversalement opposées pour le passage des conduites d'arrivée et de départ d'eau (2, 3).

11. Installation conforme à l'une des revendications 1 à 10, caractérisée en ce que l'enveloppe (6) entoure également un caloduc (18) s'étendant verticalement entre l'embase (4) et le sol et réalisant un échange thermique entre le sol et l'embase.

12. Installation conforme à l'une des revendications 1 à 11, caractérisée en ce que cette installation est complètement contenue dans un puits (19) ménagé dans le sol et fermé à sa partie supérieure par un tampon (20) permettant d'accéder au compteur (1), et une rehausse (21) est engagée dans la partie supérieure du puits (19), le bord supérieur de cette rehausse (21) recevant ledit tampon (20), et en ce que la surface intérieure de cette rehausse (21) est adaptée à la surface extérieure de l'enveloppe (6) permettant un coulissement relatif entre ces surfaces, la hauteur de cette rehausse (21) étant au moins égale à la différence entre les profondeurs minimale et maximale du puits (19).

13. Installation conforme à la revendication 6, caractérisée en ce que le chapeau isolant (11) est retenu en position par des moyens (12d) permettant le déplacement du chapeau (11) et une intervention sur le compteur (1) et en ce qu'un autre moyen (12e) coopère avec le chapeau (11) pour assurer la mise en place du chapeau (11) sur les épaulements (16b) évitant la création d'un pont thermique.

## Claims

1. A water-metering installation protected against risk of frost ans comprising a water meter (1) connected to a water inlet pipe (2) and a water outlet pipe (3), the water meter (1) being mounted on a base (4) into which the water inlet and outlet ducts (2,3) lead, the said ducts extending in a trench formed in the ground, the installation comprising a casing (6) made mainly of heat-insulating material and surrounding the ducts (2,3) and open at the bottom, characterized in that the upper part (7) of the casing is formed with a vertical passage (8) into which the base (4) of the meter is inserted, the base being directly secured to the insulating material by means (16a) which prevent a heat bridge forming between the base (4) and the exterior, the water meter being disposed above the casing and in that the meter (1) is surmounted by a cap (11) of insulating material, the bottom edge of which is in contact with the top part of the insulating material forming the casing (6).

2. An installation according to claim 1, characterized in that the casing (6) of heat-insulating material comprises an outer shell (9) moulded from rigid plastics and lined with a heat-insulating material (10) over substantially all its inner surface.

3. An installation according to claim 2, characterized in that the heat-insulating material is an expanded plastic.

4. An installation according to any of claims 1 to 3, characterized in that the insulating cap (11) is itself inside a plastic tank (12) wich surmounts the casing (6).

5. An installation according to claim 1, characterized in that the air space (13) surrounding the ducts (2,3) communicates with the air space (14) between the insulating cap (11) and the meter (1) via an air passage (15) formed in the insulating material constituting the casing (6).

6. An installation according to any of claims 1 to 5, characterized in that the contacting edges of the insulating cap (11) and of the insulating material constituting the casing (6) have complementary shoulders (16b) fitting into one another so as to prevent a heat bridge from forming.

7. An installation according to any of claims 1 to 6, characterized in that the meter (1) is mounted on the base (4) so as to be rotable between an open position and a closed position of the water inlet, and the complementary shoulders (16b) in the insulating material, and the parts of the tank (12) and the casing (6) adjacent the meter (1) are adapted to enable the meter (1) to rotate between the two aforementioned positions.

8. An installation according to any of claims 1 to 7, characterized in that the base (4) and passage (8) are secured to the upper part of the insulating casing (6) by lugs (16a) sealed in the insulating material forming the casing.

9. An installation according to any of claims 2 to 8, characterized in that the bottom part (9a) of the rigid outer shell (9) is flared downwards.

10. An installation according to claim 9, characterized in that the bottom edge of the flared part (9a) has two transversely opposite openings (17a, 17b) for the inlet and outlet water pipes (2,3).

11. An installation according to any of claims 1 to 10, characterized in that the casing (6) also surrounds a heat-conducting means (18) which extends vertically between the base (4) and the ground and provides heat exchange between them.

12. An installation according to any of claims 1 to 11, characterized in that the installation is completely contained in a well (19) formed in the ground and closed at the top by a plug (20) giving access to the meter (1), and a collar (21) is fitted into the top part of the well (19), the top edge of the collar (21) receiving the plug (20), and in that the inner surface of the plug (21) is adapted to the outer surface of the casing (6) so that the surfaces can slide relatively to one another, the height of the collar (21) being at least equal to the difference between the minimum and maximum depths of the well (19).

13. An installation according to any of claims 6 to 12, characterized in that the insulating cap (11) is held in position by means (12d) permitting movement of the cap (11) and intervention on the meter (1), and in that another means (12e) co-operates with the cap (11) for the purpose of positioning the cap (11) on the shoulders (16b) so as to prevent a heat bridge from forming.

## Patentansprüche

1. Gegen Frostgefahren geschützte Wasserzählanlage mit einem Wasserzähler (1), der mit einem Wasserzuleitungsrohr (2) und einem Wasserableitungsrohr (3) verbunden ist, wobei der Wasserzähler (1) auf einem Sockel (4) befestigt ist, in den die Wasserzuleitungs- und Wasserableitungsrohre (2, 3) münden, wobei diese Rohre in einem Graben verlaufen, der im Boden ausgehoben ist, wobei die Anlage ein Gehäuse (6) aufweist, das im wesentlichen aus thermisch isolierendem Material besteht, das die Rohre (2, 3) umgibt, und nach unten offen ist, dadurch gekennzeichnet, daß der obere Teil (7) dieses Gehäuses einen vertikalen Durchgang (8) aufweist, in den der Sockel (4) des Zählers eingesetzt ist, wobei dieser über Mittel (16a) direkt an dem isolierenden Material befestigt ist, die die Ausbildung einer thermischen Brücke zwischen dem Sockel (4) und der Außenseite vermeidet, wobei der Wasserzähler über dem Gehäuse angeordnet ist, und daß der Zähler (1) durch eine Haube (11) aus isolierendem Material abgedeckt ist, deren unterer Rand mit dem oberen Teil des isolierenden Materials des Gehäuses (6) in Kontakt steht.

2. Anlage nach Anspruch 1, dadurch gekennzeichnet, daß das Gehäuse (6) aus thermisch isolierendem Material eine äußere Schale (9) aufweist, die aus starrem Kunststoffmaterial geformt ist, das praktisch auf der gesamten Innenfläche mit einem thermisch isolierenden Material (10) bedeckt ist.

3. Anlage nach Anspruch 2, dadurch gekennzeichnet, daß das thermisch isolierende Material ein aufgeschäumtes Kunststoffmaterial ist.

4. Anlage nach einem der Ansprüche 1 bis 3, dadurch gekennzeichnet, daß sich die isolierende Haube (11) ihrerseits im Inneren einer Glocke (12) aus Kunststoffmaterial befindet, die über das Gehäuse (6) hinausragt.

5. Anlage nach Anspruch 1, dadurch gekennzeichnet, daß der Luftraum (13), der die Rohre (2, 3) umgibt, mit dem zwischen der isolierenden Haube (11) und dem Zähler (1) eingeschlossenen Luftraum (14) über einen Luftdurchgang (15) in Verbindung steht, der in dem isolierenden Material des Gehäuses (6) ausgebildet ist.

6. Anlage nach einem der Ansprüche 1 bis 5, dadurch gekennzeichnet, daß die im Kontakt stehenden Ränder der isolierenden Haube (11) und des isolierenden Materials des Gehäuses (6) komplementäre Absätze (16b) aufweisen, die so ineinander eingepaßt sind, daß die Bildung einer thermischen Brücke vermieden wird.

7. Anlage nach einem der Ansprüche 1 bis 6, dadurch gekennzeichnet, daß der Zähler (1) zwischen einer Öffnungsstellung und einer Schließstellung für die Wasserzuleitung drehbar an dem Sockel (4) befestigt ist, und daß die komplementären Absätze (16b) in dem isolierendem Material, sowie die an den Zähler (1) angrenzenden Teile der Glocke (12) und des Gehäuses (6) so angepaßt sind, daß sie eine Drehung des Zählers zwischen den obengenannten zwei Stellungen erlauben.

8. Anlage nach einem der Ansprüche 1 bis 7, dadurch gekennzeichnet, daß die Befestigung zwischen dem Sockel (4) und dem Durchgang (8) an dem oberen Teil des isolierenden Gehäuses (6) durch Klauen (16a) sichergestellt ist, die in das isolierende Material dieses Gehäuses eingemauert sind.

9. Anlage nach einem der Ansprüche 2 bis 8, dadurch gekennzeichnet, daß der untere Teil (9a) der äußeren, festen Schale (9) nach unten ausgebaucht ist.

10. Anlage nach Anspruch 9 dadurch gekennzeichnet, daß der untere Rand des ausgebauchten Teils (9a) zwei Öffnungen (17a, 17b) aufweist, die sich für den Durchgang der Wasserzuleitungs- und Wasserableitungsrohre (2, 3) quer gegenüberliegen.

11. Anlage nach einem der Ansprüche 1 bis 10, dadurch gekennzeichnet, daß das Gehäuse (6) auch ein Wärmerohr (18) umgibt, das sich vertikal zwischen dem Sockel (4) und dem Boden erstreckt und einen thermischen Austausch zwischen dem Boden und dem Sockel verwirklicht.

12. Anlage nach einem der Ansprüche 1 bis 11, dadurch gekennzeichnet, daß diese Anlage vollständig in einem Schacht (19) untergebracht ist, der im Boden ausgehoben ist, und an seinem oberen Teil durch einen, den Zugang zu dem Zähler (1) ermöglichenden Stopfen (20) abgeschlossen ist, daS ein Aufsatz (21) in den oberen Teil des Schachtes (19) eingesetzt ist, wobei der obere Rand dieses Aufsatzes (21) den Stopfen (20) aufnimmt, und daß die Innenfläche dieses Aufsatzes (21) so an die Außenfläche des Gehäuses (6) angepaßt ist, daß ein relatives Gleiten zwischen diesen Flächen ermöglicht wird, wobei die Höhe des Aufsatzes (21) wenigstens gleich der Differenz zwischen der minimalen und der maximalen Tiefe des Schachtes (19) ist.

13. Anlage nach einem der Ansprüche 6 bis 12, dadurch gekennzeichnet, daß die isolierende Haube (11) durch Mittel (12d) in Position gehalten wird, die die Verschiebung der Haube (11) und einen Eingriff an dem Zähler (1) erlauben, und daß ein anderes Mittel (12e) mit der Haube (11) zusammenwirkt, um sicherzustellen, daß die Haube (11) so auf die Absätze (16b) gesetzt wird, daß die Bildung einer thermischen Brücke vermieden wird.
